# EUROPEAN PATENT APPLICATION

(11) **EP 4 082 971 A1**
(43) Date of publication of application: **02.11.2022**
(21) Application number: 20907356.8
(22) Date of filing: 25.12.2020
(51) Int. Cl.: C01G 35/00, H01M 4/62, H01M 10/052, H01M 10/0562, H01B 1/06, H01B 1/08, C04B 35/447, C04B 35/495

(54) **LITHIUM-ION-CONDUCTIVE OXIDE SINTERED BODY AND USE THEREOF**

(30) Priority: 27.12.2019 JP 2019238567
(71) Applicant: Showa Denko K.K., Tokyo 105-8518 (JP)
(72) Inventor: SEI, Ryosuke, Tokyo 105-8518 (JP); LEE, Kunchan, Tokyo 105-8518 (JP)
(74) Representative: Strehl Schübel-Hopf & Partner
(86) International application number: PCT/JP2020/048786
(87) International publication number: WO 2021/132582

(57) **Abstract**

The present invention aims to provide a lithium-ion-conducting oxide sintered body capable of providing a solid electrolyte with an excellent ion conductivity, and a solid electrolyte, an electrode and an all-solid-state battery using the same. The lithium-ion-conducting oxide sintered body including at least lithium, tantalum, phosphorus, silicon, and oxygen as constituent elements, and having a polycrystalline structure consisting of crystal grains and grain interfaces formed between the crystal grains.

## Description

### Technical Field

The present invention relates to a lithium-ion-conducting oxide sintered body, and a solid electrolyte, an electrode and an all-solid-state battery using the same.

### Background Art

In recent years, the development of high output and high capacity batteries are required for the power sources for laptop computers, tablet devices, mobile phones, smartphones, and electric vehicles (EV). Among these, an all-solid lithium-ion battery using a solid electrolyte in place of a liquid electrolyte such as an organic solvent has been expected for the excellent charging/discharging efficiency, charging speed, safety, and productivity.

As the lithium-ion conducting solid electrolyte, a sulfide solid electrolyte is known; however, from a viewpoint of safety, an oxide solid electrolyte is preferred. As the oxide solid electrolyte, for example, Patent Literature 1 discloses a perovskite ion-conducting oxide including lithium and having SrZrO₃ as a base constituent. Non Patent Literature 1 describes LiTa₂PO₈ having a monoclinic crystal structure.

The ion-conducting oxide disclosed in Patent Literature 1 enhances the electrical conductivity at the grain boundaries by having a base composition in which the Sr site or the Zr site is replaced with other elements; however the conductivity is not yet sufficient, and demands have been lying for a high lithium ion conductivity at the grain boundaries and for the enhancement in the total ion conductivity of the lithium ion conductivities inside the crystal grains and at the grain boundaries. Further, the total lithium ion conductivity of LiTa₂PO₈ disclosed in Non Patent Literature 1 is 2.48 × 10⁻⁴ (S/cm), which is, for example, lower than the perovskite compound disclosed in Patent Literature 1.

### Citation List

### Patent Literature

Patent Literature 1: JP2016-169145A

### Non Patent Literature

Non Patent Literature 1: J. Kim et al., J. Mater. Chem. A, 2018, 6, p22478-22482

### Summary of Invention

### Technical Problem

The present invention aims to provide a lithium-ion-conducting oxide sintered body capable of providing a solid electrolyte with an excellent ion conductivity, a solid electrolyte, an electrode, and an all-solid-state battery using the same.

### Solution to Problem

The present inventors conducted extensive studies in view of the situation and consequently found that an oxide sintered body including lithium, tantalum, phosphorus, and silicon shows a high lithium ion conductivity and is useful as a solid electrolyte, whereby the present invention has been accomplished.

The conventional technologies described in the above Patent Literature 1 and Non Patent Literature 1 do not describe or suggest that the lithium ion-conducting oxide having lithium, tantalum, phosphorus, and oxygen as the constituent elements enhances the total ion conductivity of the lithium ion conductivities inside the crystal grains and at the grain boundaries.

The present invention relates to the matters of the following [1] to [11].
[1]A lithium-ion-conducting oxide sintered body, comprising:
   at least lithium, tantalum, phosphorus, silicon, and oxygen as constituent elements, and
   having a polycrystalline structure consisting of crystal grains and grain interfaces formed between the crystal grains.
[2] The lithium-ion-conducting oxide sintered body according to [1], wherein the silicon element included in the grain interface is confirmed by a scanning transmission electron microscope (STEM)-energy dispersive X-ray spectroscopy (EDX) composition analysis.
[3] The lithium-ion-conducting oxide sintered body according to [1] or [2], wherein a content ratio of the tantalum element in terms of the number of atoms in the element composition of the grain interface is lower than a content ratio of the tantalum element in terms of the number of atoms in the element composition of the crystal grain.
[4] The lithium-ion-conducting oxide sintered body according to any one of [1] to [3], wherein a thickness of the grain interface in a transmission electron microscope (TEM) cross-sectional observation is 10 nm or less.
[5] The lithium-ion-conducting oxide sintered body according to any one of [1] to [4], wherein a content ratio of the phosphorus element in terms of the number of atoms in the element composition of the grain interface is higher than a content ratio of the phosphorus element in terms of the number of atoms in the element composition of the crystal grain.
[6] The lithium-ion-conducting oxide sintered body according to any one of [1] to [5], wherein an average grain diameter of the crystal grains is 6.0 µm or less.
[7] The lithium-ion-conducting oxide sintered body according to any one of [1] to [6], wherein a relative density to a theoretical density is 50% or more.
[8] The lithium-ion-conducting oxide sintered body according to any one of [1] to [7], wherein, in the ion conductivity detected by an alternating current impedance measurement of the lithium-ion-conducting oxide sintered body, an ion conductivity at the grain interface is higher than an ion conductivity inside the crystal grain.
[9] A solid electrolyte consisting of the lithium-ion-conducting oxide sintered body according to any one of [1] to [8].
[10] An electrode comprising the lithium-ion-conducting oxide sintered body according to any one of [1] to [8].
[11] An all-solid-state battery comprising the lithium-ion-conducting oxide sintered body according to any one of [1] to [8].

### Advantageous Effects of Invention

The present invention can accordingly provide a lithium-ion-conducting oxide sintered body that can be used as a safe oxide solid electrolyte which shows an excellent ion conductivity when used as a solid electrolyte, and a solid electrolyte, an electrode and an all-solid-state battery using the same.

### Brief Description of Drawings

[Figure 1] Figure 1 shows a cross-sectional observation result of the lithium-ion-conducting oxide sintered body (1) obtained in Example 1 by a transmission electron microscope (TEM).
[Figure 2] Figure 2 shows an X-ray diffraction pattern of the lithium-ion-conducting oxide sintered body (1) obtained in Example 1 by powder X-ray diffraction measurement (XRD).
[Figure 3] Figure 3 shows an X-ray diffraction pattern of the lithium-ion-conducting oxide sintered body (2) obtained in Comparative Example 1 by powder X-ray diffraction measurement (XRD) .
[Figure 4] Figure 4 shows a secondary electron image and a boron mapping image of the lithium-ion-conducting oxide sintered body (3) obtained in Example 2 by an electron probe micro analyzer (EPMA).

### Description of Embodiments

Hereinafter, preferable embodiments of the present invention will be described in detail.

### <Lithium-ion-conducting oxide sintered body>

The lithium-ion-conducting oxide sintered body according to the present invention includes at least lithium (Li), tantalum (Ta), phosphorus (P), silicon (Si), and oxygen (O) as constituent elements and has a polycrystalline structure consisting of crystal grains and grain interfaces formed between the crystal grains.

The lithium-ion-conducting oxide sintered body in a preferable embodiment of the present invention has crystal grains and grain interfaces, wherein the crystal grain typically includes at least lithium (Li), tantalum (Ta), phosphorus (P), and oxygen (O) as constituent elements. The crystal grain of the lithium-ion-conducting oxide sintered body is not particularly limited and does not need to include silicon (Si), and the silicon element does not need to be confirmed in the crystal grain by a scanning transmission electron microscope (STEM)-energy dispersive X-ray spectroscopy (EDX) composition analysis.

In a preferable embodiment of the present invention, the average grain diameter of the crystal grains of the lithium-ion-conducting oxide sintered body is not particularly limited and is preferably 6.0 µm or less, more preferably 3.0 µm or less, and further preferably 1.5 µm or less. The average grain diameter of the crystal grains of the lithium-ion-conducting oxide sintered body can be determined by obtaining a transmitted image using a transmission electron microscope (TEM) at a magnification of x1000 or more and measuring grain sizes of at least 100 crystal grains in any area with 100-µm square. Crystal grains are not in complete spherical shape, and hence the longest diameter is defined as the grain diameter of a crystal grain. In the present description, the longest diameter of a crystal grain means the length of the longest diagonal of a polygon forming an outline of the crystal grain determined as below.

In a transmitted image of the lithium-ion-conducting oxide sintered body, the outline of a crystal grain is observed as a convex polygon on a plane field of view. Of the diagonals with a plurality of lengths in the convex polygon, the length of the longest diagonal is defined as the longest diameter of the crystal grain.

The crystal grain including lithium, tantalum, phosphorus, silicon, and oxygen as the constituent elements can also be distinguished from other crystal grains based on the difference in the elements contained in crystal grains using an energy dispersive X-ray spectroscopy (EDX) analyzer attached to TEM equipment.

In the present invention, the grain interface of the lithium-ion-conducting oxide sintered body means the part, which is present between crystal grains other than crystal grains inside the lithium-ion-conducting oxide sintered body and bonds crystal grains to each other. In the lithium-ion-conducting oxide sintered body in a preferable embodiment of the present invention, the structure of the grain interface is not clear but presumably includes a layer which is formed when deposited from the lithium ion-conducting oxide (a deposited layer) during calcination or sintering. The lithium-ion-conducting oxide sintered body may include gaps where neither crystal grains nor grain interfaces are present.

The grain interface of the lithium-ion-conducting oxide sintered body can be constituted only by a deposited layer but can also include a solid solution component such as Li₄SiO₄, Li₃PO₄, or Li₄SiO₄-Li₃PO₄. Further, when the lithium-ion-conducting oxide sintered body according to the present invention includes B (boron) as the constituent element, the grain interface can include a solid solution component such as Li₃BO₃, or Li₃BO₃-Li₄SiO₄, Li₃BO₃-Li₃PO₄, or Li₃BO₃-LiTaO₃. The lithium-ion-conducting oxide sintered body according to the present invention, when including the grain interface which contains a solid solution component, can show a better ion conductivity, hence preferable.

The solid solution component included in the grain interface preferably has a lower melting point than the crystal grain. Due to a lower melting point than the crystal grain, the component is presumably deposited and formed to the crystal grains during calcination or sintering thereby less likely causing gaps between the crystal grains and thus closely bonding the crystal grains to each other.

The grain interface of the lithium-ion-conducting oxide sintered body in a preferable embodiment of the present invention preferably includes the silicon element, and specifically it is preferable that the presence of the silicon element in the grain interface be confirmed by a scanning transmission electron microscope (STEM)-energy dispersive X-ray spectroscopy (EDX) composition analysis. The content ratio of the silicon element in the grain interface determined by the STEM-EDX composition analysis is, when the total of the phosphorus element, oxygen element, silicon element, and tantalum element is 100 atom%, preferably 1.0 atom% or more, more preferably 1.2 atom% or more, and further preferably 1.5 atom% or more. The upper limit of the content ratio of the silicon element in the grain interface is not particularly limited, and it is desirable to be typically 10 atom% or less, preferably 5 atom% or less, and more preferably 3 atom% or less.

The lithium-ion-conducting oxide sintered body in a preferable embodiment of the present invention preferably has the grain interface which includes the boron element. The grain interface can also contain a solid solution component such as Li₃BO₃-LiTaO₃. The inclusion of the boron element in the grain interface is confirmed by a scanning electron microscope (SEM)-energy dispersive X-ray spectroscopy (EDX) composition analysis (an electron probe micro analyzer (EPMA) analysis). The content of boron is preferably 0.10 atom% or more, and more preferably 0.50 atom% or more. Further, the upper limit is preferably 5.00 atom% or less, and more preferably 3.00 atom% or less.

Thus, the lithium-ion-conducting oxide sintered body in an embodiment of the present invention includes at least lithium, tantalum, boron, phosphorus, and oxygen as the constituent elements and has a polycrystalline structure consisting of crystal grains and grain interfaces formed between the crystal grains, wherein the inclusion of the boron element in the grain interface is confirmed by a scanning electron microscope (SEM)-energy dispersive X-ray spectroscopy (EDX) composition analysis.

In the lithium-ion-conducting oxide sintered body in a preferable embodiment of the present invention, the thickness of the grain interface depends on the grain diameter of the crystal grain and is not particularly limited but typically 10 nm or less, and preferably 0.1 to 10 nm. When the thickness of the grain interface is in such a range, the lithium-ion-conducting oxide sintered body in a preferable embodiment of the present invention includes the crystal grains in a sufficient density.

The typical element composition as a whole of the lithium-ion-conducting oxide sintered body in a preferable embodiment of the present invention is basically the composition in which a part of P in LiTa₂PO₈ is replaced with an element M including Si. The element M herein indispensably includes Si and can also include an element selected from the group consisting of elements of the Group 14 (provided that carbon is excluded) other than Si, Al (aluminum), and B (boron), but substantially only Si is preferable. That is, the element composition as a whole of the lithium-ion-conducting oxide sintered body has a base constituent in which a part of P in LiTa₂PO₈ is replaced with Si. When the element M includes only Si, a ratio of number of lithium, tantalum, phosphorus, silicon, and oxygen atoms (Li : Ta : P : Si : O) of the conducting oxide is 1 : 2 : (1-y) : y : 8, wherein y is preferably more than 0 and less than 0.7.

The lithium-ion-conducting oxide sintered body in a preferable embodiment of the present invention has the element composition as a whole which can also be considered equivalent to a specific oxide containing lithium. However, this does not strictly exclude the presence of impurities in the lithium-ion-conducting oxide sintered body and can include inevitable impurities caused from raw materials and/or from the production process and impurities having other crystal systems within the range of not deteriorating the lithium ion conductivity.

The ratio of number of atoms of the elements constituting the lithium-ion-conducting oxide sintered body can be determined using absolute intensity quantification by auger electron spectroscopy (AES) with, for example, a standard powder sample containing Mn, Co, and Ni in a ratio of 1 : 1 : 1 as a lithium-containing transition metal oxide such as LiCoO₂.

The element composition as a whole of the lithium-ion-conducting oxide sintered body in a preferable embodiment of the present invention can be represented by the following formula (1).

LiTa₂P_{1-y}M_{y}O₈··· formula (1)

In the above formula (1), the element M, as described above, indispensably includes Si and can also include an element selected from the group consisting of elements of the Group 14 other than Si, Al, and B, but substantially only Si is preferable. Examples of the element of the Group 14 other than Si include Ge.

The content of the element M including Si represented by y in the above formula (1) is more than 0 and less than 0.7. This content range, in terms of percentage of the number of atoms of the element M relative to the total number of atoms of the elements phosphorus and the element M, is more than 0.0 and less than 70.0. The lower limit of the element M content, when represented by y in the above formula (1), is preferably 0.01, more preferably 0.02, and further preferably 0.03. The upper limit of the element M content is preferably 0.65, more preferably 0.60, and further preferably 0.55. Further, the Si content in the element M, in terms of percentage of the number of atoms, is 1 or more, preferably 50 or more, more preferably 70 or more, and further preferably 90 or more, and most preferably 100.

When the element M includes only Si in the above, the element composition of the lithium-ion-conducting oxide sintered body in a preferable embodiment of the present invention can be represented by the following formula (2).

LiTa₂P_{1-y}Si_{y}O₈··· formula (2)

When an element M content in the lithium-ion-conducting oxide sintered body is in the above range, the total ion conductivity of the lithium ion conductivities inside the crystal grains and at the grain interfaces (grain boundaries) is high. The element M content can be determined by a conventionally known quantification analysis in terms of percentage of the number of atoms of the element M relative to the total number of atoms of phosphorus and the element M. For example, the element M content can be determined by adding acid to a sample to thermally decompose, then volume-fixing the pyrolysate and using a high frequency inductively coupled plasma (ICP) atomic emission spectroscopy. In the method for producing a lithium ion-conducting oxide sintered body to be described later, the percentage of the number of atoms of the element M relative to the total number of atoms of phosphorus and the element M can be simply calculated from feeding amounts of raw materials in terms of a doping amount of the element M since phosphorus and the element M do not efflux from the system.

As described above, the element M includes Si, and can also include an element selected from the group consisting of elements of the Group 14 (provided that carbon is excluded) other than Si, Al, and B. Examples of the element other than Si that can be included in the element M include Ge, Al, and B, of which Al and B are preferable. The element M is preferably substantially only Si. When the element M includes only Si, a lithium ion conductivity particularly at the grain interfaces of the sintered body is higher, hence preferable.

With a focus on the valence of the constituent elements of the lithium-ion-conducting oxide sintered body, the valence of the element M to be doped has a different valence from that of phosphorus, and thus the lithium contained in the lithium-ion-conducting oxide sintered body conceivably increases and decreases to balance the charge neutrality. For example, when an increased and decreased amount caused by the charge balance associated with replacing P with M is represented by x, the element composition of the lithium-ion-conducting oxide sintered body can be represented by the following formula (3).

Li₁₊ₓTa₂P_{1-y}M_{y}O₈·· ·formula (3)

The element composition as a whole of the lithium-ion-conducting oxide sintered body herein preferably has the element M including only Si and can be represented by the following formula (4).

Li₁₊ₓTa₂P_{1-y}Si_{y}O₈··· formula (4)

In the lithium-ion-conducting oxide sintered body of the present invention, the constituent element composition of the crystal grain can be equivalent to the constituent element composition of the grain interface or can be different. The element composition at each site can be determined by a STEM-EDX composition analysis. As shown in an example to be described later, the area occupied by crystal grains to the area occupied by grain interfaces is larger in a cross-sectional image, and the constituent element composition of the crystal grain can be considered approximately equivalent to the constituent element composition of the entire sintered body.

Preferably, the content ratio of the tantalum element in terms of the number of atoms in the element composition of the grain interface is lower than the content ratio of the tantalum element in terms of the number of atoms in the element composition of the crystal grain. More preferably, the content ratio of the tantalum element in terms of the number of atoms in the element composition of the crystal grain is 1.01 times or more, further preferably 1.05 times or more, and further preferably 1.08 times or more, as much as the content ratio of the tantalum element in terms of the number of atoms in the element composition of the grain interface.

Further, preferably, the content ratio of the phosphorus element in terms of the number of atoms in the element composition of the grain interface is higher than the content ratio of the phosphorus element in terms of the number of atoms in the element composition of the crystal grain. More preferably, the content ratio of the phosphorus element in terms of the number of atoms in the element composition of the grain interface is 1.01 times or more, further preferably 1.05 times or more, and further preferably 1.08 times or more, as much as the content ratio of the phosphorus element in terms of the number of atoms in the element composition of the crystal grain.

In the lithium-ion-conducting oxide sintered body in a preferable embodiment of the present invention, it is desirable that the content ratio of the phosphorus element and the silicon element in terms of the number of atoms respectively in the grain interface be higher than in the crystal grain, whereas the content ratio of the tantalum element in terms of the number of atoms in the grain interface be lower than in the crystal grain.

The lithium-ion-conducting oxide sintered body according to the present invention is constituted by crystal grains and grain interfaces and for that reason, a decision on a high or low content ratio of element composition of the grain interface and crystal grain can be made by a direct comparison of the element compositions between the crystal grain part and the grain interface part, or by a comparison of the element compositions between the crystal grain part and the entire sintered body, or of the element compositions between the grain interface part and the entire sintered body.

In the lithium-ion-conducting oxide sintered body in a preferable embodiment of the present invention, it is desirable that, in the ion conductivity detected by an alternating current impedance measurement of the sintered body, an ion conductivity at the grain interface be higher than an ion conductivity inside the crystal grain. Preferably, the ion conductivity at the grain interface is desirably in the range from 1.1 times or more, more preferably 1.5 to 5 times, and further preferably 1.7 to 4 times, to the ion conductivity inside the crystal grain. The alternating current impedance measurement can be carried out by a known method, and specifically can be carried out by the method described in an example to be described later.

The lithium-ion-conducting oxide sintered body according to the present invention is not particularly limited in the shape thereof and can be a shape suitably selected in accordance with the purpose of use. For example, the sintered body can be a desired shape in accordance with the purpose of use such as spherical, pellet, plate, sheet, flake, and mass. Further, the size thereof is not particularly limited and, for example, when the sintered body is round, the longest diameter is 1 mm or more, and furthermore preferably 2 mm or more. When the sintered body is a polygon, the total length of all sides is 1 mm or more, and furthermore preferably 2 mm or more.

### (Content rate of monoclinic crystal)

The lithium-ion-conducting oxide sintered body in a preferable embodiment of the present invention has a content rate of monoclinic crystal structure, when confirmed in the X-ray diffraction (XRD) measurement, of typically 60% or more, preferably 70% or more, more preferably 80% or more, and further preferably 90% or more. The content rate of the monoclinic crystal structure can be determined by the method using the Rietveld analysis to be described later in an example. When a content rate of the monoclinic crystal is in the range described above, the lithium ion conductivity in total tends to be higher.

### (Other crystal structures)

When the lithium-ion-conducting oxide sintered body is insufficiently calcined in the production method to be described later and thus raw materials remain, diffraction peaks derived from the raw materials can be confirmed in the X-ray diffraction measurement. The presence of oxides of the element M such as lithium carbonate (Li₂CO₃), tantalum pentoxide (Ta₂O₅), and silicon dioxide (SiO₂) and diammonium hydrogen phosphate ((NH₄)₂HPO₄) to be used as raw materials can be confirmed by the X-ray diffraction measurement. These raw material compounds do not have the lithium ion conductivity and thus are preferably not included. Additionally, in the case of insufficient calcination, the presence of by-products can be confirmed in the X-ray diffraction measurement as diffraction peaks derived from the by-products. Specifically, lithium tantalate (LiTaO₃), Li₃PO₄, TaPO₅, and Ta₂O₅ can be observed; however, it is preferable that these by-products be not included because they have a low lithium ion conductivity.

### Relative density of the lithium-ion-conducting oxide sintered body

In the lithium-ion-conducting oxide sintered body in a preferable embodiment of the present invention, a relative density, when a theoretical density is 100%, is preferably 50% or more of the theoretical density, however it is not particularly limited thereto. It is more preferably 60% or more, and further preferably 70% or more. The theoretical density to be compared can be simply a theoretical density of LiTa₂PO₈ that does not include the element M such as silicon.

### Method for producing the lithium-ion-conducting oxide sintered body

The method for producing the lithium-ion-conducting oxide sintered body in a preferable embodiment of the present invention is not particularly limited as long as the lithium-ion-conducting oxide sintered body within the above constituent ranges can be obtained. For the production method, employable is a method of producing a lithium ion-conducting oxide by, for example, the solid-phase reaction or the liquid-phase reaction, suitably shaping as needed and calcining (sintering) this oxide.

### (Production of a lithium ion-conducting oxide (a))

The lithium-ion-conducting oxide sintered body according to the present invention can be preferably produced by producing a lithium ion-conducting oxide (a) including at least lithium, tantalum, phosphorus, silicon, and oxygen by the solid-phase reaction or the liquid-phase reaction, suitably shaping as needed and calcining (sintering) this oxide. The lithium ion-conducting oxide (a), when being in a solid state and having a polycrystalline structure consisting of crystal grains and grain interfaces, can be used as it is as the lithium-ion-conducting oxide sintered body according to the present invention. Hereinafter, the production method using the solid-phase reaction will be described in detail.

An example of the production method by the solid-phase reaction is a production method at least having one mixing step and one sintering step.

### • Mixing step

In the mixing step, compounds including lithium atoms(s), tantalum atom(s), and the elements M including silicon atom(s), respectively, and phosphate are mixed.

The compound containing lithium atom(s) is not particularly limited, and inorganic compounds are preferable due to easy handleability, and examples of the inorganic compound containing lithium atom(s) include lithium compounds such as lithium carbonate (Li₂CO₃) and lithium oxide (Li₂O). These lithium compounds can be used singly, or in combinations of two or more thereof. Lithium carbonate (Li₂CO₃) is preferably used due to easy decomposition and reaction.

The compound containing tantalum atom(s) are not particularly limited, and inorganic compounds are preferable due to easy handleability, and examples include tantalum compounds such as tantalum pentoxide (Ta₂O₅) and titanium nitrate (Ta(NO₃)₅). These tantalum compounds can be used singly, or in combinations of two or more thereof. Tantalum pentoxide (Ta₂O₅) is preferably used from a viewpoint of costs.

The compound containing the element M including silicon atom(s) is not particularly limited, but an inorganic compound is preferable due to easy handleability, and examples include a simple or an oxide of the element M. These substances can be used singly, or two or more can be used in combination. Of these, an oxide is preferably used from a viewpoint of easy handleability. Specifically, when the element M includes only silicon atom(s), silicon dioxide (SiO₂) can be used. Further, when the element M includes Ge or Al in addition to silicon atom(s), germanium dioxide (GeO₂) or aluminum oxide (Al₂O₃) can be used with silicon dioxide (SiO₂). When the element M includes boron, lithium borate (Li₃BO₃) can be used.

The phosphate is not particularly limited, and examples include phosphates such as diammonium hydrogen phosphate ((NH₄)₂HPO₄) and ammonium dihydrogen phosphate (NH₄H₂PO₄) due to easy decomposition and reaction. These phosphates can be used singly, or in combinations of two or more thereof.

For the mixing method of the raw materials described above, a method that can be used is a roll tumbling mill, a ball mill, a small-diameter ball mill (bead mill), a medium stirring mill, an airflow grinding mill, a mortar, an automatic kneading mortar, a tank mill, or a jet mill. The ratio of the raw materials to be mixed is, simply speaking, a stoichiometric ratio so that the composition of the formula (1) described above is achieved. More specifically, lithium atoms are likely to efflux from the system in the sintering step to be described later, and thus the compound containing lithium atom(s) described above can be adjusted by adding about 10 to 20% excess.

The mixing can be carried out under the atmosphere. A gas atmosphere of a nitrogen gas and/or an argon gas with an adjusted oxygen gas content is more preferred.

### • Calcining step

In the calcining step, the mixture obtained in the mixing step is calcined. When the calcining step is carried out several times such as a 2-phase step of low-temperature calcining and high-temperature calcining, a pulverizing step using, for example, a ball mill or a mortar can be provided between the calcining steps for the purpose of pulverizing or downsizing diameter of the primary calcined product.

The calcining step can be carried out under the atmosphere. A gas atmosphere of a nitrogen gas and/or an argon gas with an adjusted oxygen gas content is more preferred.

The calcination temperature is preferably in a range from 800 to 1200°C, more preferably in a range from 950 to 1100°C, and further preferably in a range from 950 to 1000°C. When the calcination is carried out at 800°C or more, the element M including silicon is sufficiently solid-soluted and the ion conductivity is enhanced, whereas when the temperature is 1200°C or less, lithium atoms are less likely to efflux from the system, hence preferable. The calcination time is preferably 30 minutes to 16 hours, and preferably 3 to 12 hours. When the calcination time is in the range described above, the ion conductivity of the sintered body produced using the lithium ion-conducting oxide to be obtained is likely to be higher and well-balanced in both inside the crystal grains and at the grain boundaries, hence preferable. When the calcination time is longer than the ranges described above, lithium atoms are likely to efflux from the system. The calcination time and temperature are adjusted in coordination with each other.

When the calcining step is, for example, a 2-phase step of low-temperature calcining and high-temperature calcining, a preliminary calcining at a low temperature can be carried out at 400 to 800°C for 30 to 12 hours.

High-temperature calcining can be carried out twice for preventing by-products from remaining. In the second calcining step, the calcining temperature is preferably in a range from 800 to 1200°C, more preferably in a range from 950 to 1100°C, and further preferably in a range from 950 to 1000°C. The calcining time at each calcining step is preferably 30 to 8 hours, and preferably 2 to 6 hours.

The calcined product obtained after the calcination, when left in the atmosphere, can change in quality by, for example, absorbing moisture or reacting to carbon dioxide. The calcined product obtained after the calcination is preferably moved and stored under demoistured inert gas atmosphere when a temperature drops lower than 200°C while decreasing the temperature after the calcination.

Thus, the lithium ion-conducting oxide (a) can be obtained.

### (Production of the lithium-ion-conducting oxide sintered body)

The lithium-ion-conducting oxide sintered body according to the present invention can be preferably produced by using an oxide including at least lithium, tantalum, phosphorus, silicon, and oxygen as the constituent elements such as the lithium ion-conducting oxide (a) obtained as described above. The lithium ion-conducting oxide (a), when obtained in a solid state, can be used as it is as the lithium-ion-conducting oxide sintered body, or the lithium-ion-conducting oxide sintered body can also be produced by powdering the lithium ion-conducting oxide (a), adjusting the grain size as needed, shaping, and sintering. In the present invention, the production method having a step of shaping the powdered lithium ion-conducting oxide (a) to a desired shape and calcining (sintering) is preferable, but not limited thereto, because the lithium-ion-conducting oxide sintered body with an excellent ion conductivity is easily produced.

The lithium ion-conducting oxide (a) can be shaped by a known powder molding method using, for example, a powdered lithium ion-conducting oxide (a) having a desired grain diameter adjusted by a ball mill as needed.

Examples of the powder-molding method include a method includes a method in which a solvent is added to a powder to form a slurry, the slurry is applied to a collector, dried, and then pressurized (doctor blade method), a method includes a method in which a slurry is put in a liquid-absorbing mold, dried, and then pressurized (casting method), a method includes a method in which a powder is put in a mold of a predetermined shape and compression-molded (metallic molding method), an extrusion method includes a method in which a slurry is extruded from a die and molded, a centrifugal force method includes a method in which a powder is compressed and molded by a centrifugal force, a roll molding method includes a method in which a powder is fed to a roller press machine and roll-molded, cold isostatic pressing includes a method in which a powder is put in a flexible bag of a predetermined shape and the bag is put in a pressure medium to which isotropic pressure is applied, and hot isostatic pressing includes a method in which a powder is put in a container of a predetermined shape, a vacuum state is created, and isotropic pressure is applied to the container at a high temperature by a pressure medium.

Examples of the metallic molding method include a single-action pressing method includes a method in which a powder is put in a fixed lower punch and a fixed die, and pressure is applied to the powder by a movable upper punch, a double-action pressing method includes a method in which a powder is put in a fixed die, and pressure is applied to the powder by a movable lower punch and a movable upper punch, a floating die method includes a method in which a powder is put in a fixed lower punch and a movable die, a pressure is applied to the powder by a movable upper punch, and when the pressure reaches higher than a predetermined value, the movable die is moved so that the fixed lower punch relatively enters inside the movable die, and a withdrawal method includes a method in which a powder is put in a fixed lower punch and a movable die, and pressure is applied to the powder by a movable upper punch while simultaneously the movable die is moved so that the fixed lower punch relatively enters inside the movable die.

The lithium-ion-conducting oxide sintered body according to the present invention can be preferably obtained by calcining (sintering) the lithium ion-conducting oxide (a) shaped as described above by a known method. The sintering, for example, can be carried out by the same method as the high-temperature calcination when preparing the lithium ion-conducting oxide (a). Specifically, for example, the sintering can be carried out under calcination conditions at the calcination temperature ranging from 800 to 1200°C, preferably from 950 to 1100°C, and more preferably from 950 to 1000°C, and the calcination time of 1 to 8 hours, and preferably 2 to 6 hours.

### <Use of the lithium-ion-conducting oxide sintered body>

The lithium-ion-conducting oxide sintered body according to the present invention has an excellent ion conductivity and thus can be preferably used as a solid electrolyte, and can be particularly preferably used as a solid electrolyte for a lithium-ion secondary battery and a solid electrolyte for an all-solid-state battery.

### (Lithium-ion secondary battery)

Examples of one of the preferable uses of the lithium-ion-conducting oxide sintered body according to the present invention include the utilization for a lithium-ion secondary battery as the solid electrolyte.

The structure of the lithium-ion secondary battery is not particularly limited and, for example, in the case of a solid battery with a solid electrolyte layer, the battery has a structure in which a positive electrode collector, a positive electrode layer, a solid electrolyte layer, a negative electrode layer, and a negative electrode collector are laminated in this order.

The positive electrode collector and the negative electrode collector are not particularly limited as long as a material thereof conducts electrons without causing an electrochemical reaction. For example, these are constituted of a conductor such as a simple and an alloy of metals such as copper, aluminum, and iron or a conductive metal oxide such as an antimony-doped tin oxide (ATO), and a tin-doped indium oxide (ITO). Also usable is a collector in which a conductive adhesive layer is provided on the surface of a conductor. The conductive adhesive layer can be constituted by including, for example, a particulate conductive material and/or a fibrous conductive material.

The positive electrode layer and the negative electrode layer can be obtained by a known powder molding method. For example, a positive electrode collector, a powder for a positive electrode layer, a powder for a solid electrolyte layer, a powder for a negative electrode layer, and a negative electrode collector are superimposed in this order and powder-molded simultaneously, whereby the layer formation of the positive electrode layer, the solid electrolyte layer, and the negative electrode layer, respectively and the connection between the positive electrode collector, the positive electrode layer, the solid electrolyte layer, the negative electrode layer, and negative electrode collector respectively can be simultaneously achieved. Alternatively, each layer can also be powder-molded sequentially. The obtained powder-molded products can be heat-treated such as calcination as needed. For the powder molding, a known powder molding method such as a metallic molding method mentioned above can be employed.

The thickness of the positive electrode layer is preferably 10 to 200 µm, more preferably 30 to 150 µm, and further preferably 50 to 100 µm. The thickness of the solid electrolyte layer is preferably 50 nm to 1000 µm, and more preferably 100 nm to 100 µm. The thickness of the negative electrode layer is preferably 10 to 200 µm, more preferably 30 to 150 µm, and further preferably 50 to 100 µm.

### • Active material

Examples of the active material for the negative electrode include materials containing at least one selected from the group consisting of lithium alloys, metal oxides, graphites, hard carbons, soft carbons, silicon, silicon alloys, silicon oxides SiOₙ (0<n≤2), silicon/carbon composites, composites in which silicon is enclosed in pores of a porous carbon, lithium titanates, and graphites covered with a lithium titanate. The silicon/carbon composites and the composites in which a silicon domain is enclosed in pores of a porous carbon have a high specific capacity thereby to enhance an energy density and a battery capacity, hence preferable. More preferable is composites enclosing a silicon domain in pores of a porous carbon which have excellent volume expansion relaxation associated with the lithium occlusion/release of silicon and are capable of maintaining a good balance among the macro conductivity, the micro conductivity, and the ion conductivity in a composite electrode material or an electrode layer. Particularly preferable is composites in which a silicon domain is enclosed in pores of a porous carbon, wherein the silicon domain is amorphous, the size of the silicon domain is 10 nm or less, and pores derived from a porous carbon are present near the silicon domain.

Examples of the active material for the positive electrode include materials containing at least one selected from the group consisting of LiCo oxide, LiNiCo oxide, LiNiCoMn oxide, LiNiMn oxide, LiMn oxide, LiMn spinel, LiMnNi oxide, LiMnAl oxide, LiMnMg oxide, LiMnCo oxide, LiMnFe oxide, LiMnZn oxide, LiCrNiMn oxide, LiCrMn oxide, lithium titanate, lithium metal phosphate, transition metal oxide, titanium sulfide, graphite, hard carbon, transition metal-containing lithium nitride, silicon dioxide, lithium silicate, lithium metal, lithium alloy, Li-containing solid solutions, and lithium storable intermetallic compounds. LiNiCoMn oxide, LiNiCo oxide, and LiCo oxide are preferable, and LiNiCoMn oxide is more preferable. This is because this active material has good affinity to a solid electrolyte and has excellent balance among the macro conductivity, the micro conductivity, and the ion conductivity. Additionally, these active materials have a high average potential thereby to enhance an energy density and a battery capacity in the balance between the specific capacity and the stability. The active materials for the positive electrode can also have the surface covered with, for example, lithium niobate, lithium phosphate, or lithium borate, which is an ion-conductive oxide.

The active material in an embodiment of the present invention is preferably a particulate. The 50% diameter in the volume-based particle size distribution thereof is preferably 0.1 µm or more and 30 µm or less, more preferably 0.3 µm or more and 20 µm or less, further preferably 0.4 µm or more and 10 µm or less, and most preferably 0.5 µm or more and 3 µm or less. Additionally, a ratio of a length of the major axis to a length of the minor axis (length of major axis/length of minor axis), that is, the aspect ratio, is preferably less than 3, and more preferably less than 2.

The active material in an embodiment of the present invention may form secondary particles. In such an instance, the 50% diameter in the number-based particle size distribution of the primary particles is preferably 0.1 µm or more and 20 µm or less, more preferably 0.3 µm or more and 15 µm or less, further preferably 0.4 µm or more and 10 µm or less, and most preferably 0.5 µm or more and 2 µm or less. When an electrode layer is formed by compression molding, the active material is preferably the primary particle. When the active material is the primary particle, the electron conduction path or the hole conduction path is less likely to be impaired even when compression-molded.

### Examples

Hereinafter, the present invention will be further specifically described with reference to the Examples, but it should be understood that the present invention is not limited only to the Examples.

### [Example 1]

### • Preparation of a lithium-ion-conducting oxide sintered body (1) (20% Si-doped)

A lithium-ion-conducting oxide sintered body (1), which includes lithium, tantalum, phosphorus, silicon, and oxygen as constituent elements wherein a ratio of number of silicon atoms in the total of silicon and phosphorus is 20%, is prepared. The element composition as a whole of the lithium-ion-conducting oxide sintered body (1) of interest is the composition, wherein the oxide represented by LiTa₂PO₈ has 20% of the number of P atoms replaced with Si, and y in the formula Li₁₊ₓTa₂P_{1-y}Si_{y}O₈ (x is charge balance associated with replacing P with Si) is 0.2.

Using lithium carbonate (Li₂CO₃) (manufactured by Merck KGaA/Sigma-Aldrich, purity 99.0% or more), tantalum pentoxide (Ta₂O₅) (manufactured by FUJIFILM Wako Pure Chemical Corporation, purity 99.9%), silicon dioxide (SiO₂) (manufactured by FUJIFILM Wako Pure Chemical Corporation, purity 99.9%), diammonium hydrogen phosphate ((NH₄)₂HPO₄) (manufactured by Merck KGaA/Sigma-Aldrich, purity 98% or more) as raw materials, each of the raw materials was weighed in a feeding composition ratio of Li : Ta : P : Si = 1.38 : 2.00 : 0.852 : 0.200 in consideration of the Li extraction amount, charge balance x, and production inhibitory effect of by-products (LiTaO₃) caused during calcination so that the ratio of number of lithium, tantalum, phosphorus, and silicon atoms (Li : Ta : P : Si) after the calcination was 1+x : 2 : 0.8 : 0.2.

Each of the weighed raw material powders was crushed and mixed for 2 hours using a zirconia ball mill (zirconia ball: diameter 1 mm) with the addition of a suitable amount of toluene.

The obtained mixture was put in an alumina boat and calcined for 2 hours at 1100°C while the temperature was increased to 1100°C at a rate of temperature increase of 10°C/min under an air (gas flow rate: 100 mL/min) atmosphere using a rotary calcination furnace (manufactured by Motoyama) thereby to obtain a primary calcined product.

A suitable amount of toluene was added to the primary calcined product obtained by calcining, and the primary calcined product was crushed and mixed for 2 hours using a zirconia ball mill (zirconia ball: diameter 1 mm) thereby to obtain a pulverized product.

The obtained pulverized product was preliminary molded in a hydraulic press at 40 MPa and then finally molded at 300 MPa by cold isostatic press molding (CIP) thereby to obtain a pellet having an average grain diameter of 10 mm and a thickness of 1 mm.

The obtained pellets were put in an alumina boat and calcined for 3 hours at 1100°C while the temperature was increased to 1100°C at a rate of temperature increase of 10°C/min under an air (gas flow rate: 100 mL/min) atmosphere using a rotary calcination furnace (manufactured by Motoyama) thereby to obtain a secondary calcined product.

After the temperature was decreased, the obtained secondary calcined product was taken out at room temperature, moved to under a demoistured nitrogen atmosphere, thereby to obtain a lithium-ion-conducting oxide sintered body (1), wherein a ratio of number of silicon atoms in the total of silicon and phosphorus is 20%.

### • Cross-sectional observation by a transmission electron microscope (TEM)

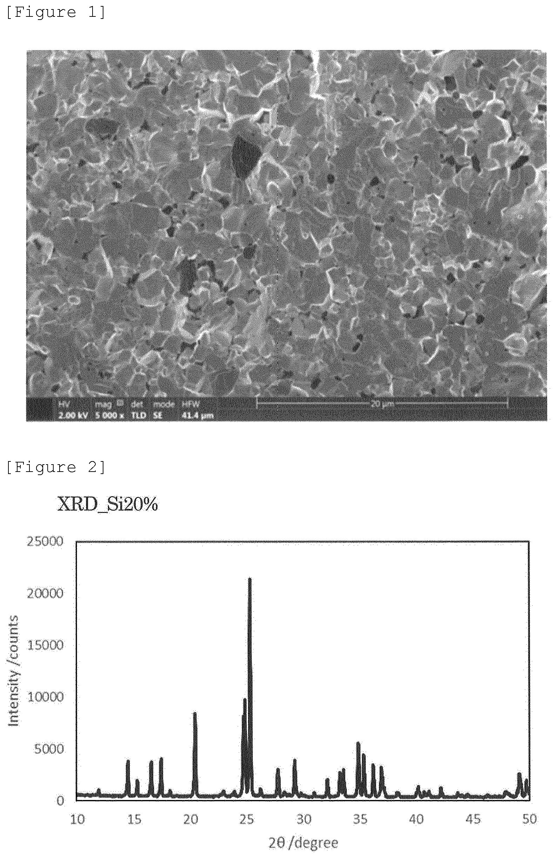

A cross-sectional observation sample was prepared from the lithium-ion-conducting oxide sintered body (1) obtained above using a fast ion bombardment (FIB) and cross-sectionally observed by a transmission electron microscope (TEM). The result is shown in Figure 1.

Figure 1 confirmed that the lithium-ion-conducting oxide sintered body (1) has a polycrystalline structure consisting of crystal grains and grain interfaces. Further, the analysis result of Figure 1 showed that an average grain diameter of the crystal grains was 1.3 µm, and a thickness of the grain interfaces was 2 nm on average.

### • STEM-EDX Composition analysis

The pellets prepared using the lithium-ion-conducting oxide sintered body (1) by the measurement pellets preparation method described above were processed using the fast ion bombardment (FIB) thereby to obtain a STEM-EDX composition analysis sample.

The STEM-EDX composition analysis was carried out on the entire sintered body and the grain interface of the lithium-ion-conducting oxide sintered body (1) by the following equipment and conditions.
Equipment: JEM-ARM200F (manufactured by JEOL Ltd.)
EDX Detector: JED-2300T (manufactured by JEOL Ltd.)
Measurement condition Acceleration voltage: 200 kV
EDX Mapping resolution: 256 × 256 pixels
Using these results, the content rate (atom%) of each element, when the total of the phosphorus element, oxygen element, silicon element, and tantalum element is 100 atom%, was determined. The results are shown in Table 1.

### • Content rate of a monoclinic crystal structure

The powder X-ray diffraction measurement (XRD) of the lithium-ion-conducting oxide sintered body (1) was carried out using a powder X-ray diffractometer PANalytical MPD (manufactured by Spectris Co., Ltd.). The measurement was carried out under the X-ray diffraction measurement conditions of using Cu-Kα ray (output 45 kV, 40 mA) in a range of a diffraction angle 2θ = 10 to 50°, thereby to obtain an X-ray diffraction pattern of the lithium-ion-conducting oxide sintered body (1). This X-ray diffraction pattern is shown in Figure 2.

The obtained XRD pattern was subjected to the Rietveld analysis using a known analysis software RIETAN-FP (obtainable from the creator; website of Fujio Izumi "RIETAN-FP·VENUS system distribution file" (http://fujioizumi.verse.jp/download/download.html)) to determine the amount of monoclinic crystal and the amount of crystal other than monoclinic crystal, and the calculated monoclinic crystal content rate was 96.8%.

### • Ion conductivity evaluation

### (Preparation of measurement pellets)

Measurement pellets for the ion conductivity evaluation of the lithium ion-conducting oxide were prepared as follows. The obtained lithium-ion-conducting oxide sintered body (1) was molded into a disc shape having a diameter of 10 mm and a thickness of 1 mm using a tablet molding machine and calcined at 1100°C for 3 hours under the atmosphere. The obtained calcined product had a relative density to the theoretical density of 96.3%. Gold layers were formed using a spattering machine on both faces of the obtained calcined product thereby to obtain measurement pellets for the ion conductivity evaluation.

### (Impedance measurement)

The ion conductivity evaluation of the lithium-ion-conducting oxide sintered body (1) was carried out as follows. The measurement pellets prepared by the method described above were retained at 25°C for 2 hours before the measurement. Then, AC impedance measurement was carried out at 25°C using an impedance analyzer (manufactured by Solartron Analytical, Model No: 1260A) in a frequency range of 1 Hz to 10 MHz at an amplitude of 25 mV. The obtained impedance spectra were fit to equivalent circuits using an equivalent circuit analysis software ZView attached to the equipment thereby to obtain ion conductivities at the crystal grains and the grain interfaces, and lithium ion conductivity in total respectively. The determined ion conductivities are each shown in Table 1.

### [Comparative Example 1]

### • Preparation of a lithium-ion-conducting oxide sintered body (2) (no Si-doped)

A lithium-ion-conducting oxide sintered body (2) represented by LiTa₂PO₈ was obtained in the same manner as in Example 1, with the exception that an amount of each raw material used in the preparation of the lithium-ion-conducting oxide sintered body of Example 1 was changed. Each raw material herein was weighed in a feeding composition ratio of Li : Ta : P : Si = 1.15 : 2.00 : 1.065 : 0 and used in consideration of the Li extraction amount, charge balance x, and production inhibitory effect of by-products (LiTaO₃) caused during calcination so that the ratio of number of lithium, tantalum, phosphorus, and silicon atoms (Li : Ta : P : Si) after the calcination was 1 : 2 : 1 : 0.

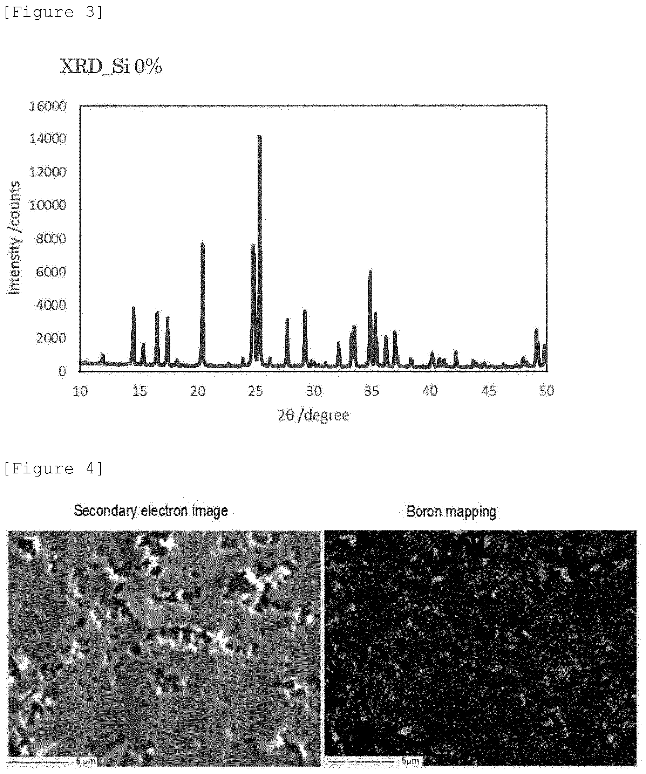

Various physical properties of the obtained lithium-ion-conducting oxide sintered body (2) were measured or evaluated in the same manner as in Example 1. The lithium-ion-conducting oxide sintered body (2) was confirmed to have a polycrystalline structure consisting of crystal grains and grain interfaces in a cross-sectional observation by a transmission electron microscope (TEM). Further, the analysis result showed that an average grain diameter of the crystal grains was 1.4 µm, and a thickness of the grain interfaces was 2 nm on average. Other results are shown in Table 1. Further, the X-ray diffraction pattern is shown in Figure 3.

The lithium-ion-conducting oxide sintered body (2), which does not include silicon as the constituent element, had a lower lithium ion conductivity and was revealed to require further improvement when compared with the silicon-containing lithium-ion-conducting oxide sintered body (1).

The above results from Example and Comparative Example show that the lithium-ion-conducting oxide sintered body, which includes at least lithium, tantalum, phosphorus, silicon, and oxygen as constituent elements and has a polycrystalline structure consisting of crystal grains and grain interfaces formed between the crystal grains, has an excellent lithium ion conductivity, and reveal that the lithium ion conductivity is excellent particularly at the grain interface region.

**[Table 1]**

| | Si-doped amount | | Element content ratio (atom%) | | | | | Monoclinic crystal content rate (%) | Lithium ion conductivity δ (mS·cm⁻¹) | | | Relative density (%) |
|---|---|---|---|---|---|---|---|---|---|---|---|---|
| | Si/(Si+P)x 100(%) | y | | P | O | Si | Ta | | Crystal grain | Grain interface | Total | |
| Example 1 | 20 | 0.20 | Entire | 10.45 | 63.10 | - | 26.44 | 96.8 | 1.24 | 3.82 | 0.939 | 96.3 |
| | | | Grain interface | 11.25 | 62.61 | 1.82 | 24.32 | | | | | |
| Comparative Example 1 | 0 | 0.00 | Entire | 12.55 | 62.26 | | 25.19 | 100.0 | 2.05 | 0.0270 | 0.0267 | 95.0 |
| | | | Grain interface | 13.21 | 64.22 | | 22.58 | | | | | |

### [Example 2]

### • Preparation of a lithium-ion-conducting oxide sintered body (3) (26% B-doped)

A lithium-ion-conducting oxide sintered body (3), which includes lithium, tantalum, phosphorus, boron, and oxygen as constituent elements wherein a ratio of number of boron atoms in the total of boron and phosphorus is 26%, is prepared.

Using lithium carbonate (Li₂CO₃) (manufactured by Merck KGaA/Sigma-Aldrich, purity 99.0% or more), tantalum pentoxide (Ta₂O₅) (manufactured by FUJIFILM Wako Pure Chemical Corporation, purity 99.9%), boric acid (H₃BO₃) (manufactured by FUJIFILM Wako Pure Chemical Corporation, purity 99.5% or more), and diammonium hydrogen phosphate ((NH₄)₂HPO₄) (manufactured by Merck KGaA/Sigma-Aldrich, purity 98% or more) as raw materials, each of the raw materials was weighed so that a ratio of number of lithium, tantalum, boron, and phosphorus atoms (Li : Ta : B : P) was 1.45 : 1.70 : 0.30 : 0.85. Further, in consideration of the loss of lithium atoms that flow out during the calcination step, lithium carbonate was weighed so that an amount was 1.05 times as much as the lithium atomic weight, and further diammonium hydrogen phosphate was weighed so that an amount was 1.06 times as much as the phosphorus atomic weight for inhibiting the production of by-products during the calcination step.

Each of the weighed raw material powders was crushed and mixed for 2 hours using a zirconia ball mill (zirconia ball: diameter 5 mm) with the addition of a suitable amount of toluene thereby to obtain a primary mixture.

The obtained primary mixture was put in an alumina boat and calcined for 4 hours at 1000°C while the temperature was increased thereto at a rate of temperature increase of 10°C/min under an air (gas flow rate: 100 mL/min) atmosphere using a rotary calcination furnace (manufactured by Motoyama) thereby to obtain a primary calcined product.

A suitable amount of toluene was added to the obtained primary calcined product, and the primary calcined product was crushed and mixed for 2 hours using a zirconia ball mill (zirconia ball: diameter 1 mm) thereby to obtain a secondary mixture.

Using a tablet molding machine, a pressure of 40 MPa was applied to the obtained secondary mixture by a hydraulic press thereby to form a disk-shaped molded body having a diameter of 10 mm and a thickness of 1 mm, and then a pressure of 300 MPa was applied to the disk-shaped molded body by CIP (cold isostatic press) thereby to prepare a pellet.

The obtained pellets were put in an alumina boat and calcined for 96 hours at 850°C while the temperature was increased thereto at a rate of temperature increase of 10°C/min under an air (gas flow rate: 100 mL/min) atmosphere using a rotary calcination furnace (manufactured by Motoyama) thereby to obtain a sintered body.

After the temperature was decreased to room temperature, the obtained sintered body was taken out from the rotary calcination furnace, moved and stored under a demoistured nitrogen atmosphere, thereby to obtain a lithium-ion-conducting oxide sintered body (3).

Various physical properties of the obtained lithium-ion-conducting oxide sintered body (3) were measured or evaluated in the same manner as Example 1. A content rate of the monoclinic crystal was 83.5%. The ion conductivities at the crystal grains and the grain interfaces, and the lithium ion conductivity in total were 0.867 mS/cm, 6.10 mS/cm, and 0.759 mS/cm, respectively.

### • Electron probe micro analyzer (EPMA) analysis

The obtained lithium-ion-conducting oxide sintered body (3) was cut to set a cross section by the ion milling method (CP polishing, acceleration voltage: 6kV, polishing time: 8 hours).

Using an EPMA equipment JMX-8530F (manufactured by JEOL Ltd.), EPMA measurement (acceleration voltage: 10kV, illumination current: 1 × 10⁻⁷A) of the cross section of the obtained solid electrolyte was carried out thereby to obtain a secondary electron image and a boron mapping image.

Figure 4 shows the secondary electron image and the boron mapping image by EPMA of the lithium-ion-conducting oxide sintered body (3) obtained in Example 2. In the secondary electron image, the part appeared in a grayish neutral color is the monoclinic crystal, and the black parts and the white parts show the grain boundaries. In the boron mapping, the parts with a high content of the boron atoms are shown in a white color, whereas the parts with a low content thereof are shown in a black color.

Figure 4 reveals that the boron atoms are present abound at the grain boundaries.

### [Example 3]

### • Preparation of a lithium-ion-conducting oxide sintered body (4) (10% Si- and B-doped in total)

A lithium-ion-conducting oxide sintered body (4), which includes lithium, tantalum, boron, phosphorus, silicon, and oxygen as constituent elements wherein a ratio of number of total boron and silicon atoms in the total of boron, silicon, and phosphorus is 10%, is prepared.

A lithium-ion-conducting oxide sintered body (4) was prepared in the same manner as Example 2, with the exception that silicon dioxide (SiO₂) (manufactured by FUJIFILM Wako Pure Chemical Corporation, purity 99.9%) was further used in Example 3, and each of the raw material powders was used so that a ratio of number of lithium, tantalum, boron, phosphorus, and silicon atoms (Li : Ta : B : P : Si) was 1.17 : 1.90 : 0.10 : 0.94 : 0.01.

Various physical properties of the obtained lithium-ion-conducting oxide sintered body (4) were measured or evaluated in the same manner as Example 1. A content rate of the monoclinic crystal was 99.0%. The ion conductivities at the crystal grains and the grain interfaces, and the lithium ion conductivity in total were 1.36 mS/cm, 0.971 mS/cm, and 0.566 mS/cm, respectively.

### Industrial Applicability

The lithium-ion-conducting oxide sintered body of the present invention is preferable as a solid electrolyte, and can be particularly preferably used as a solid electrolyte for a lithium-ion secondary battery.

## Claims

1. A lithium-ion-conducting oxide sintered body, comprising:
at least lithium, tantalum, phosphorus, silicon, and oxygen as constituent elements, and
having a polycrystalline structure consisting of crystal grains and grain interfaces formed between the crystal grains.

2. The lithium-ion-conducting oxide sintered body according to claim 1, wherein the silicon element included in the grain interface is confirmed by a scanning transmission electron microscope (STEM)-energy dispersive X-ray spectroscopy (EDX) composition analysis.

3. The lithium-ion-conducting oxide sintered body according to claim 1 or 2, wherein a content ratio of the tantalum element in terms of the number of atoms in the element composition of the grain interface is lower than a content ratio of the tantalum element in terms of the number of atoms in the element composition of the crystal grain.

4. The lithium-ion-conducting oxide sintered body according to any one of claims 1 to 3, wherein a thickness of the grain interface in a transmission electron microscope (TEM) cross-sectional observation is 10 nm or less.

5. The lithium-ion-conducting oxide sintered body according to any one of claims 1 to 4, wherein a content ratio of the phosphorus element in terms of the number of atoms in the element composition of the grain interface is higher than a content ratio of the phosphorus element in terms of the number of atoms in the element composition of the crystal grain.

6. The lithium-ion-conducting oxide sintered body according to any one of claims 1 to 5, wherein an average grain diameter of the crystal grains is 6.0 µm or less.

7. The lithium-ion-conducting oxide sintered body according to any one of claims 1 to 6, wherein a relative density to a theoretical density is 50% or more.

8. The lithium-ion-conducting oxide sintered body according to any one of claims 1 to 7, wherein, in the ion conductivity detected by an alternating current impedance measurement of the lithium-ion-conducting oxide sintered body, an ion conductivity at the grain interface is higher than an ion conductivity inside the crystal grain.

9. A solid electrolyte consisting of the lithium-ion-conducting oxide sintered body according to any one of claims 1 to 8.

10. An electrode comprising the lithium-ion-conducting oxide sintered body according to any one of claims 1 to 8.

11. An all-solid-state battery comprising the lithium-ion-conducting oxide sintered body according to any one of claims 1 to 8.
